# EUROPEAN PATENT SPECIFICATION

(11) **EP 3 809 317 B1**
(45) Date of publication and mention of the grant of the patent: **30.09.2026**
(21) Application number: 20187335.3
(22) Date of filing: 23.07.2020
(51) Int. Cl.: G06V 10/74, G06V 20/52, G06V 40/20, G06F 18/22, G08B 13/196, G08B 29/18

(54) **INFORMATION IDENTIFICATION SYSTEM AND METHOD**
INFORMATIONSIDENTIFIKATIONSSYSTEM UND -VERFAHREN
SYSTÈME ET PROCÉDÉ D'IDENTIFICATION D'INFORMATIONS

(30) Priority: 16.10.2019 CN 201910985868
(43) Date of publication of application: 21.04.2021
(73) Proprietor: Tsinghua University, Haidian District, Beijing 100084 (CN); Nuctech Company Limited, Beijing 100084 (CN)
(72) Inventor: ZHAO, Ziran, Beijing, 100084 (CN); XIE, Lu, Beijing, 100084 (CN); GU, Jianping, Beijing, 100084 (CN); LIU, Peng, Beijing, 100084 (CN); JIAO, Yitao, Beijing,, 100084 (CN)
(74) Representative: Gunzelmann, Rainer

(56) References cited:
- US-A1- 2007 121 999
- US-A1- 2008 031 491
- US-A1- 2011 064 268
- ALPER YILMAZ ET AL: "Object tracking", ACM COMPUTING SURVEYS, ACM, NEW YORK, NY, US, US, vol. 38, no. 4, 25 December 2006 (2006-12-25), pages 13 - es, XP058090583, ISSN: 0360-0300, DOI: 10.1145/1177352.1177355

## Description

### TECHNICAL FIELD

The present disclosure relates to the field of identification, and more specifically, to a dangerous behavior identification system and method based on multi-dimensional information obtained from the Internet of Things and the big data technology.

### BACKGROUND

Public safety is related to the stability of the country and society, and directly affects the safety of people's lives and property. In order to protect personal and public safety, comprehensive security inspection has gradually become an inevitable trend. However, due to the low efficiency of the conventional security inspection methods, the limited ability to detect dangerous information, and the poor sense of experience of inspected objects etc., the existing security inspection systems have been unable to meet the requirements of comprehensive security inspection, especially during peak hours, in which it may cause serious congestion and affect traffic efficiency. Examples of existing techniques are US 2011/064268 A1 and US 2008/031491 A1 which detect anomalous behaviour in video data. For example, the conventional security inspection gates may only detect metal items which are carried, and may not detect non-metallic dangerous items such as explosives, contrabands entrained in a body etc., and methods such as hand-touching, visual inspection etc. are inefficient and cause disgust from inspected persons.

At present, the main dangerous behaviors in the field of security inspection comprise: a contraband being entrained in a body of an inspected person; a contraband being entrained in a carried item; an inspected person being involved with hard drugs and explosive chemical reagents; an item which has not been inspected being handed over across a fence or a security inspection machine (which is referred to as item handover across a fence), an object being left behind, fighting and brawling, illegal detention, running in a reverse direction, etc. in a (designated) public region.

### SUMMARY

The present application aims to solve the above problems in the related art.

In a first aspect of the present application, there is provided an information identification system, as defined in claim 1 of the appended claims, which may comprise: an information collection module including a plurality of information collection devices and configured to collect multi-dimensional information for an object; an information processing module configured to detect whether there is abnormality information for the object based on the multi-dimensional information collected by the information collection module; a storage module configured to store the multi-dimensional information and various data generated during the detection by the information processing module; and a display and reminder module configured to display the abnormality information and issue an alarm.

According to the first aspect, the information processing module may further be configured to, in a case where multiple abnormality information is detected at the same time, determining priorities of the multiple abnormality information, so as to display the abnormality information according to the priorities.

According to the first aspect, the information processing module may further be configured to extract a bounding box and feature information for the object from a video stream collected by the information collection module, and perform at least one of the following operations at least based on one of the bounding box and the feature information: tracking or searching for the object in a real time, detecting whether there is an item handover action across a fence from the object, and detecting whether there is an item left or person staying in a region of interest.

According to the first aspect, the information processing module may further be configured to perform the following operations to perform tracking or searching in a real time: extracting a plurality of first bounding boxes from a first frame in the video stream, and extracting a plurality of second bounding boxes from a second frame in the video stream; pairing each of the plurality of first bounding boxes with each of the plurality of second bounding boxes to form a paired matrix comprising a plurality of paired items; and calculating a value of each of the plurality of paired items in the paired matrix, and using an item with an optimal value as a target item, wherein the target item indicates an item formed by pairing bounding boxes for the same object.

According to the first aspect, the information processing module may further be configured to calculate an overlap ratio between the paired bounding boxes in each of the plurality of paired items; calculate similarity between feature information of the paired bounding boxes in each paired item; and select a paired item with the largest overlap ratio between the bounding boxes and the largest similarity between the feature information in the bounding boxes as the target item.

According to the first aspect, the information processing module may further be configured to perform the following operations to detect whether there is an item handover action across a fence: detecting whether there are objects in regions of interest on opposite sides of a location of interest based on the bounding box; detecting key points of the objects to determine a distance between the key points of a wrist, in response to the objects completely entering the regions of interest; and determining that there is an item handover action across a fence between the objects, in response to the distance between the key points of the wrist being less than or equal to a first threshold.

According to the first aspect, the information processing module may further be configured to extract a bounding box of an object in each of the regions of interest on the opposite sides of the location of interest, and calculate an area ratio between the bounding box and the region of interest; and determine that the object completely enters the region of interest, in response to the area ratio is greater than or equal to a second threshold.

According to the first aspect, the information processing module may further be configured to perform the following operations to detect whether there is an item left or person staying in a region of interest: detecting whether there is a static object in the region of interest; detecting residence time of the static object in the region of interest; detecting whether the static object is a person or an item based on the feature information; and determining that there is a person staying in the region of interest, in response to the static object being a person and the residence time being greater than or equal to a threshold; or detecting whether there is a person within a threshold distance from the item, in response to the static object is an item, and determining that there is an item left in the region of interest, in response to there is no person within the threshold distance from the item and the residence time is greater than or equal to the threshold.

In a second aspect of the present application, there is provided an information identification method, as defined in claim 2 of the appended claims, which may comprise: collecting multi-dimensional information for an object by using multiple information collection devices; detecting whether there is abnormality information for the object based on the multi-dimensional information; storing the multi-dimensional information and various data generated during the detection; and displaying the abnormality information and issuing an alarm.

According to the second aspect, the method may further comprise: in a case where multiple abnormality information is detected at the same time, determining priorities of the multiple abnormality information, so as to display the abnormality information according to the priorities.

According to the second aspect, the detecting whether there is abnormality information for the object based on the multi-dimensional information may comprise: extracting a bounding box and feature information for the object from a video stream collected by the multiple information collection devices, and performing at least one of the following operations based on at least one of the bounding box and the feature information: tracking or searching for the object in a real time, detecting whether there is an item handover action across a fence from the object, and detecting whether there is an item left or person staying in a region of interest.

According to the second aspect, the tracking or searching for the object in a real time may comprise: extracting a plurality of first bounding boxes from a first frame in the video stream, and extracting a plurality of second bounding boxes from a second frame in the video stream; pairing each of the plurality of first bounding boxes with each of the plurality of second bounding boxes to form a paired matrix comprising a plurality of paired items; and calculating a value of each of the plurality of paired items in the paired matrix, and using an item with an optimal value as a target item, wherein the target item indicates an item formed by pairing bounding boxes for the same object.

According to the second aspect, the calculating a value of each of the plurality of paired items in the paired matrix, and using an item with an optimal value as a target item may comprise: calculating an overlap ratio between the paired bounding boxes in each of the plurality of paired items; calculating a similarity between feature information of the paired bounding boxes in each paired item; and selecting a paired item with the largest overlap ratio between the bounding boxes and the largest similarity between the feature information in the bounding boxes as the target item.

According to the second aspect, the detecting whether there is an item handover action across a fence from the object may comprise: detecting whether there are objects in regions of interest on opposite sides of a location of interest based on the bounding box; detecting key points of the objects to determine a distance between the key points, in response to the objects completely enter the regions of interest; and determining that there is an item handover action across a fence between the objects, in response to the distance between the key points is less than or equal to a first threshold.

According to the second aspect, the detecting whether there are objects in regions of interest on opposite sides of a location of interest based on the bounding box may comprise: extracting a bounding box of an object in each of the regions of interest on the opposite sides of the location of interest, and calculating an area ratio between the bounding box and the region of interest; and determining that the object completely enters the region of interest, in response to the area ratio is greater than or equal to a second threshold.

According to the second aspect, the detecting whether there is an item left or object staying in the region of interest may comprise: detecting whether there is a static object in the region of interest; detecting residence time of the static object in the region of interest; detecting whether the static object is a person or an item based on the feature information; and determining that there is a person staying in the region of interest, in response to the static object is a person and the residence time is greater than or equal to a threshold; or detecting whether there is a person within a threshold distance from the item, in response to the static object is an item, , and determining that there is an item left in the region of interest, in response to there is no person within the threshold distance from the item and the residence time is greater than or equal to the threshold.

According to a third aspect of the present application, there is provided an electronic device, as defined in claim 4 of the appended claims, comprising: one or more processors; and a memory for storing one or more programs, wherein the one or more programs, when executed by the one or more processors, cause the one or more processors to perform the method described above.

According to a fourth aspect of the present application, there is provided a non-transitory computer readable medium, as defined in claim 3 of the appended claims, having recorded thereon program code instructions capable of implementing the method according to the second aspect.

With the information identification system, information identification method and non-transitory computer readable medium according to the above aspects of the present application, dangerous behaviors may be identified in a omnidirectional, efficient, accurate and non-sensing manner based on multi-dimensional information in areas where security inspection is required, for example, public transportation, major games and activities, key areas, densely populated areas, etc.

### BRIEF DESCRIPTION OF THE ACCOMPANYING DRAWINGS

Fig. 1 illustrates a block diagram of an information identification system according to an exemplary embodiment.
Fig. 2 illustrates an exemplary block diagram of an information collection module according to an exemplary embodiment.
Fig. 3 illustrates a block diagram of an information processing module according to an exemplary embodiment.
Fig. 4 illustrates a flowchart of a process of tracking a pedestrian according to an exemplary embodiment.
Fig. 5 illustrates a flowchart of a process of detecting item handover across a fence according to an exemplary embodiment.
Fig. 6 illustrates a flowchart of a process of detecting illegal stay of a person/leaving of an item according to an exemplary embodiment.
Fig. 7 illustrates a block diagram of an electronic device according to an exemplary embodiment.

### DETAILED DESCRIPTION

The specific embodiments of the present disclosure will be described in detail below. It should be illustrated that the embodiments described here are for illustration only and are not intended to limit the present disclosure. In the following description, in order to provide a thorough understanding of the present disclosure, a large number of specific details are set forth. However, it is obvious to those of ordinary skill in the art that it is not necessary to employ these specific details to practice the present disclosure. In other instances, in order to avoid obscuring the present disclosure, well-known circuits, materials, or methods are not specifically described.

Throughout the specification, reference to "one embodiment", "embodiment", "one example" or "example" means that a particular feature, structure or characteristic described in connection with the embodiment or example is contained in at least one embodiment of the present disclosure. Therefore, the phrases "in one embodiment", "in an embodiment", "one example" or "an example" appearing in various places throughout the specification do not necessarily all refer to the same embodiment or example. Furthermore, specific features, structures, or characteristics may be combined in one or more embodiments or examples in any suitable combination and/or sub-combination.

It should be understood that when an element is referred to as being "coupled" or "connected" to another element, it may be directly coupled or connected to the other element or there may be an intervening element therebetween. In contrast, when an element is referred to as being "directly coupled" or "directly connected" to another element, there are no intervening elements therebetween.

In addition, the term "and/or" as used here comprises any and all combinations of one or more of associated listed items.

It will be understood that singular nouns corresponding to terms may comprise one or more things unless the context clearly indicates otherwise. As used here, each of phrases such as "A or B", "at least one of A and B", "at least one of A or B", "A, B or C", "at least one of A, B and C", and "at least one of A, B, or C" may comprise all possible combinations of items listed in the corresponding one of the multiple phrases. As used here, terms such as "1^{st}" and "2^{nd}" or "first" and "second" may be used to simply distinguish a corresponding component from another component and are not intended to limit the components in other respects (for example, importance or sequence).

As used here, the term "module" may comprise a unit implemented in hardware, software, or firmware, and may be interchangeably used with other terms (for example, "logic", "logic block", "portion", or "circuit"). A module may be a single integrated component adapted to perform one or more functions or the smallest unit or part of the single integrated component. For example, according to an embodiment, the module may be implemented in a form of an Application Specific Integrated Circuit (ASIC).

It should be understood that the various embodiments of the present disclosure and the terminology used therein are not intended to limit the technical features set forth here to specific embodiments, but comprise various changes, equivalents, or alternatives to the corresponding embodiments. Unless otherwise expressly defined herein, all terms will give the broadest possible interpretation, comprising the meanings implied in the description and the meanings understood by those skilled in the art and/or defined in dictionaries, papers, etc.

In addition, it should be understood by those of ordinary skill in the art that the accompanying drawings provided here are for illustrative purposes, and the accompanying drawings are not necessarily drawn to scale. For the description of the accompanying drawings, similar reference signs may be used to refer to similar or related elements. The present disclosure will be exemplarily described below with reference to the accompanying drawings.

In order to meet the needs of comprehensive security inspection and accurate identification of abnormality information, the present application provides an information identification system and method which may efficiently and accurately identify abnormality information without sensation.

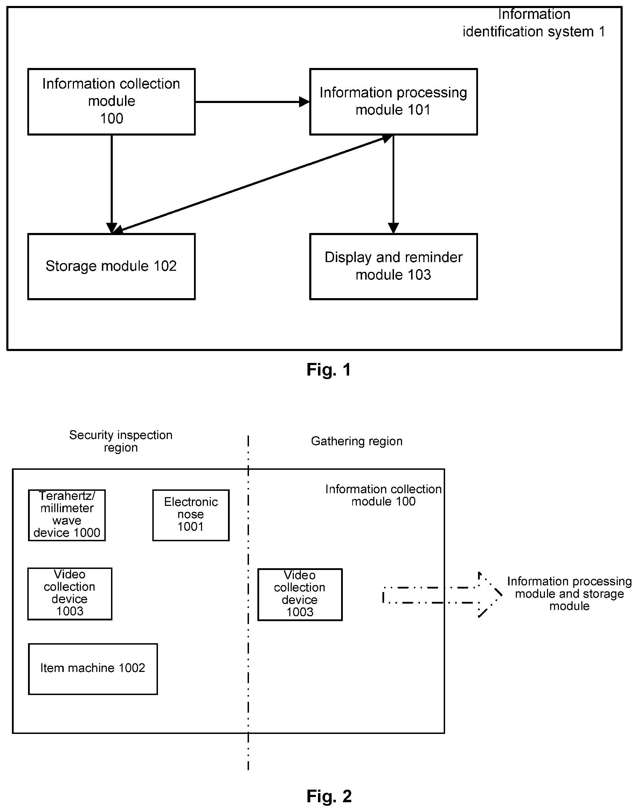

Fig. 1 illustrates a block diagram of an information identification system 1 according to an exemplary embodiment. As shown in Fig. 1, the information identification system 1 may comprise an information collection module 100, an information processing module 101, a storage module 102, and a display and reminder module 103.

The information collection module 100 may be configured to collect information of an inspected object and/or an object of interest. In an exemplary embodiment, the information collection module 100 may comprise a multi-dimensional information collection device. The information collection module 100 may be one or more of a camera, a terahertz/millimeter wave security inspection instrument, an item machine, an infrared camera, an electronic nose, a depth camera, etc., but is not limited thereto.

In an exemplary embodiment, the information collection module 100 may collect video information, image information, motion information, face information, gait information, bone information, iris information, information of key points (for example, a wrist, an elbow, etc.) of the inspected object and/or the object of interest, but is not limited thereto.

A configuration and functions of the information collection module 100 will be explained in detail in the following description.

The information processing module 101 may be configured to receive the collected information of the inspected object and/or the object of interest from the information collection module 100 and identify whether there is abnormality information for the inspected object and/or the object of interest based on the received information.

The abnormality information may be, for example, that an inspected object carries a contraband, an inspected object is involved with drugs or explosive fuels, an object hands over an item across a fence, a person stays illegally, an item is left, an object performs an abnormal action, etc., but is not limited thereto.

The information processing module 101 may be configured to link a plurality of security inspection devices through comprehensive processing and determination of the abnormality information.

The information processing module 101 may comprise a plurality of functional modules. A configuration and functions of the information processing module 101 will be explained in detail in the following description.

The storage module 102 may be configured to store any information and data generated when the information identification system 1 performs the information identification process. For example, the storage module 102 may store any information of the inspected object and/or the object of interest obtained by the information collection module 100, various data generated when the information processing module 101 performs identification of the abnormality information, etc., but is not limited thereto.

The display and reminder module 103 may be configured to display the abnormality information identified by the information processing module 101 and issue an alarm.

In one example, the display and reminder module 103 may be configured to display an object which causes the abnormality information etc.

In one example, the display and reminder module 103 may be configured to display an occurrence time, a location, etc. of the abnormality information.

In an exemplary embodiment, the display and reminder module 103 may comprise a display device and an alarm device. The display device may be, for example, any device capable of providing a display function, such as a computer, a tablet computer, a personal digital assistant, any wearable device (for example, an electronic watch, electronic glasses, etc.), etc., but is not limited thereto.

The alarm device may be any device capable of providing alarm information. The alarm device may be, for example, an acoustic alarm device (for example, an alarm bell, etc.), an optical alarm device (for example, a flash light, etc.), a tactile alarm device (for example, a vibration device), etc., but is not limited thereto.

A configuration and functions of the display and reminder module 103 will be explained in detail in the following description.

Fig. 2 illustrates an exemplary block diagram of the information collection module 100 according to an exemplary embodiment. The configuration of the information collection module 100 shown in Fig. 2 is only exemplarily proposed for the purpose of convenience of explanation, and it should be understood by those skilled in the art that the configuration of the information collection module 100 is not limited thereto.

As shown in Fig. 2, the information collection module 100 may comprise, for example, a terahertz/millimeter wave device 1000 for security inspection in a security inspection region, an electronic nose 1001, an item machine 1002, and a device (for example, a camera) 1003 for collecting a video in an object gathering region (for example, a waiting hall, a departure lounge, etc.) and an security inspection region.

In an exemplary embodiment, the terahertz/millimeter wave device 1000 may be configured to perform perspective shooting on an inspected object to inspect whether there is a contraband hidden in a body of the inspected object.

In an exemplary embodiment, the electronic nose 1001 may be configured to acquire an odor on the body of the inspected object for analysis so as to determine whether the inspected object has been exposed to drugs, explosives, etc.

In an exemplary embodiment, the item machine 1002 may be configured to acquire information of items in a luggage to detect whether there is a contraband hidden in the luggage etc.

In an exemplary embodiment, the video collection device 1003 may be configured to collect a video of an object in the gathering region.

There may be one or more devices included in the information collection module 100. In addition, according to practical needs, the information collection module 100 may further comprise other modules in addition to the above modules.

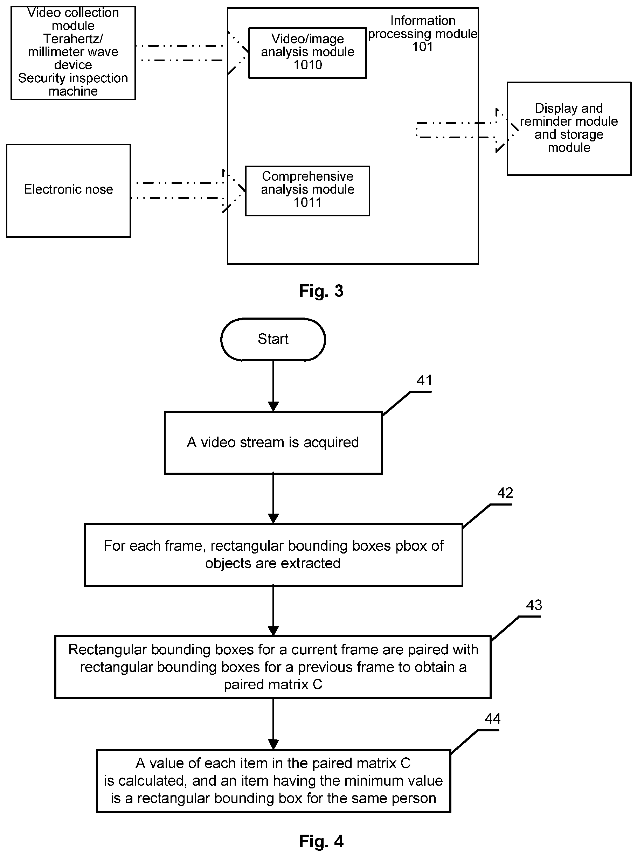

Fig. 3 illustrates a block diagram of the information processing module 101 according to an exemplary embodiment. The configuration of the information processing module 101 shown in Fig. 3 is only exemplarily proposed for the purpose of convenience of explanation, and it should be understood by those skilled in the art that the configuration of the information processing module 101 is not limited thereto.

As shown in Fig. 3, the information processing module 101 may comprise a video/image analysis module 1010 and a comprehensive analysis module 1011.

The video/image analysis module 1010 may be configured to implement functions of, for example, tracking an object, searching for an object, identifying item handover across a fence, and detecting illegal stay of a pedestrian and leaving of an item etc. based on a video/images acquired from the video collection device, the terahertz/millimeter wave device, and/or the item machine.

For convenience of explanation, the functions of, for example, tracking an object, searching for a certain object, identifying item handover across a fence, and detecting illegal stay of a pedestrian and leaving of an item etc. which are implemented in the video/image analysis module 1010 will be described by taking the following embodiments as an example.

### • Object tracking

A general principle of performing object tracking in a real time is that firstly, rectangular bounding boxes of objects are obtained from different image frames of a video stream, and features of the objects are extracted from the rectangular bounding boxes, then a part of the rectangular bounding boxes is excluded by calculating an overlap ratio between the rectangular bounding boxes, and then objects with the most similar features are determined to be the same object through feature comparison.

Fig. 4 illustrates a flowchart of a process of tracking a pedestrian according to an exemplary embodiment. This will be described below in conjunction with Fig. 4.

Specifically, during object tracking in a real time, at step 41, the video/image analysis module 1010 acquires a video stream *F =* {*fᵢ*}, *i* = 1 : *T* based on a video of an object collected by the video collection device 100, wherein *T* represents time and *fᵢ* represents each frame of image.

Then, the video/image analysis module 1010 analyzes the video stream to track a pedestrian. Specifically, at step 42, for each frame of image *fᵢ*, rectangular bounding boxes of pedestrians in the frame of image are output using a detection algorithm based on a deep convolutional network by using a video frame as an input of the network, wherein each of the rectangular bounding boxes is denoted as pbox=[x,y,w,h], (*x, y*) represents a vertex of an upper left corner of the denoted rectangular box, and (*w, h*) represents a width and a height of the denoted rectangular box.

At step 43, a series of pedestrian rectangular boxes obtained by detecting a current frame are paired with rectangular boxes obtained by detecting a previous frame. This pairing is implemented by weighting a result reid_cost of pedestrian re-identification and an overlap ratio box_overlap_cost between the pedestrian rectangular boxes to obtain a paired matrix *C_{pre*cur},* wherein pre*cur represents a dimension of the matrix, pre is a number of pbox obtained by detecting the previous frame, and cur represents a number of pbox obtained by detecting the current frame.

The rectangular paired matrix may be, for example: ${C}_{pre * cur} = \left[\begin{matrix}{c}_{1 ∗ 1} & ⋯ & {c}_{1 ∗ cur} \\ ⋯ & ⋯ & ⋯ \\ {c}_{pre ∗ 1} & ⋯ & {c}_{pre ∗ cur}\end{matrix}\right]$ wherein c_{1*1} represents that a first rectangular bounding box in the previous frame is paired with a first rectangular bounding box in the current frame, c_{1*cur} represents that the first rectangular bounding box in the previous frame is paired with a cur^{th} rectangular bounding box in the current frame, c_{pre*1} represents a pre^{th} rectangular bounding box in the previous frame is paired with the first rectangular bounding box in the current frame, c_{pre*cur} represents that the pre^{th} rectangular bounding box in the previous frame is paired with the cur^{th} rectangular bounding box in the current frame, and so on. Thereby, pre*cur pairs of rectangular bounding boxes may be formed.

At step 44, a value of each item in the paired matrix is calculated, and an item with the minimum value is selected as a target item.

A calculation formula of the value of each of the respective items (c_{1*1},...,c_{1*cur},...,c_{pre*1},...c_{pre*cur}) in the paired matrix C_{pre*cur} may be expressed as: $C = {w}_{1} \left(box_overlap_cos t\right) + {w}_{2} \left(reid_cos t\right) ,$ wherein *w*₁, *w*₂ are weighting factors, box_overlap_cost represents a degree of overlap between pedestrian rectangular boxes , $box_overlap_cost = {\sum }_{i = 1}^{pre} {\sum }_{j = 1}^{cur} iou \left(pbox\left(i\right),pbox\left(j\right)\right) , iou = \frac{pbox \left(i\right) ∩ pbox \left(j\right)}{pbox \left(i\right) ∪ pbox \left(j\right)}$, and reid_cost represents a similarity between features of pedestrians within the pedestrian rectangular boxes.

In order to determine reid_cost, a pedestrian re-identification model based on a deep convolutional network is used to extract pedestrian features *φₚ, p =* 1 : *N* in pbox, wherein *φₚ* indicates features of objects extracted from a p^{th} rectangular bounding box, and N indicates a number of the bounding boxes. Then, based on the extracted features, an Euclidean distance between corresponding features in pbox in consecutive two frames is calculated as reid_cost, i.e., $reid _ cos t = {\sum }_{i = 1}^{pre} {\sum }_{j = 1}^{cur} {\left({φ}_{i}-{φ}_{j}\right)}^{2} .$

It may be known from the above description that when box_overlap_cost has a maximum value and reid_cost has a minimum value, it may be determined that objects with the highest feature similarity in rectangular bounding boxes with the largest overlap ratio are the same person.

In order to facilitate the determination, *C = w*₁(*box _ overlap _ cos t) + w₂*(*reid* _ *cost*) is modified to $C ′ = {w}_{1} \left(1-{\sum }_{i = 1}^{pre} {\sum }_{j = 1}^{cur} iou \left(pbox\left(i\right),pbox\left(j\right)\right)\right) + {w}_{2} \left(reid_cos t\right)$, so that an item with the minimum value of C' is determined as a target item, and objects contained in the target item are the same object.

In this way, pedestrian tracking is achieved in a real time, and a returned result is denoted as tracker=[id,x,y,w,h], where id represents an unique identifier of a pedestrian, and the object may be located through the identifier.

The above description is related to tracking an object in a real time between consecutive frames. In some cases, this principle may also be used to search for a person between non-consecutive frames (for example, frames separated by a period of time, etc.).

In one example, in response to a fight event having occurred and the fight event having ended in a personnel gathering region, in order to search for a person involved in the fight event, an object tracking function may be used to find the person involved in the fight event. The principle is as follows.

Based on a fight video collected by the video/image collection device, a rectangular bounding box pbox=[x,y,w,h] of a person involved in the fight is obtained using a detection algorithm based on a deep convolutional network, wherein (*x, y*) represents a vertex of an upper left corner of the denoted rectangular box, and (*w, h*) represents a width and a height of the denoted rectangular box.

The video/image collection device is used to continuously collect videos at various places in the personnel gathering region. For each frame of image, the detection algorithm based on a deep convolutional network is also used to obtain rectangular bounding boxes of objects in the image. Then, each rectangular bounding box in the frame is paired with the rectangular bounding box of the person involved in the fight in the fight video image frame to obtain a paired matrix C". It may be known from the above description that the calculation formula of the value of each item in the paired matrix C" may be transformed into: $C " = {w}_{1} \left(1-{\sum }_{i = 1}^{pre} {\sum }_{j = 1}^{cur} iou \left(pbox\left(i\right),pbox\left(j\right)\right)\right) + {w}_{2} \left(reid_cos t\right) ,$ wherein *w*₁, *w*₂ are weighting factors, box_overlap_cost represents a degree of overlap between pedestrian rectangular boxes, $box_overlap_cost = {\sum }_{i = 1}^{pre} {\sum }_{j = 1}^{cur} iou \left(pbox\left(i\right),pbox\left(j\right)\right)$, wherein $iou = \frac{pbox \left(i\right) ∩ pbox \left(j\right)}{pbox \left(i\right) ∪ pbox \left(j\right)}$, and reid_cost represents a similarity between pedestrians within the pedestrian rectangular boxes.

Pedestrian re-identification model based on a deep convolutional network is used to extract features (for example, facial features, gait features, human body features, iris features, etc.) of objects in each rectangular bounding box pbox. Based on the extracted features, an Euclidean distance between the corresponding features in the rectangular bounding boxes pbox is calculated as follows: $reid _ cos t = {\sum }_{i = 1}^{pre} {\sum }_{j = 1}^{cur} {\left({φ}_{i}-{φ}_{j}\right)}^{2}$

In addition, an overlap ratio between each rectangular bounding box in the current frame and the rectangular bounding box of the person involved in the fight in the fight video image frame is further calculated.

Based thereon, when the value of C" is a minimum value, it may indicate that an item with the minimum value in the paired matrix is the target item, that is, objects in the two rectangular bounding boxes in the target item are the same person.

At this point, a pedestrian involved in the fight may be tracked.

### • Detection of item handover across a fence

A general principle of detection of item handover across a fence is to calculate an area ratio between a pedestrian rectangular bounding box pbox(i) and a region of interest (R) (for example, regions on opposite sides of the fence) according to the region of interest (R), a location of interest (for example, a fence L), and the pedestrian rectangular bounding box pbox (i): $are_ratio = \frac{Area \left(pbox\right) ∩ Area \left(R\right)}{Area \left(pbox\right)} ∈ \left[0, 1\right]$

If area_ratio is greater than a threshold, it indicates that there are pedestrians entering the regions of interest on the opposite sides of the location of interest. At this time, it is determined whether there is an item handover action across a fence between the pedestrians according to a distance between key points at wrists of the pedestrians by detecting the distance between the key points of the pedestrians.

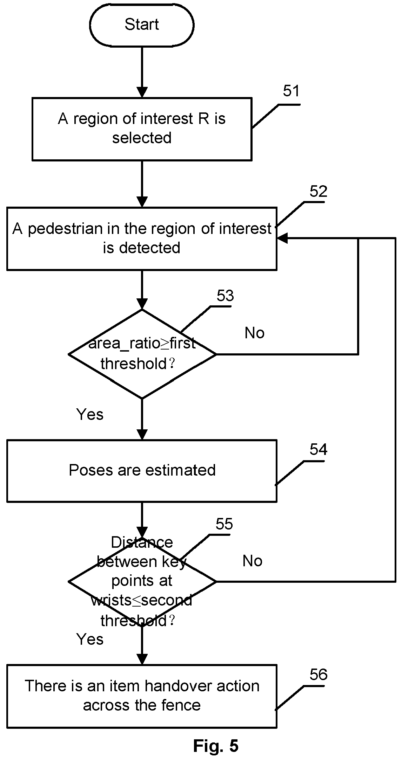

Fig. 5 illustrates a flowchart of a process of detecting item handover across a fence according to an exemplary embodiment. At step 51, a region of interest R (within, for example, a range at a distance of 0.5m from the fence, etc.) is firstly selected.

At step 52, it is detected whether a pedestrian appears in the region of interest. Specifically, for each frame, for each region of interest on each of the opposite sides of the location of interest, it is determined whether there is a pedestrian appearing in the region of interest.

At step 53, if it is determined that area_ratio is greater than or equal to a first threshold ("Yes" in step 53), it is determined that there is a pedestrian entering the regions of interest on the opposite sides of the location of interest. If area_ratio is less than the first threshold ("No" in step 53), it is determined that there is no pedestrian entering the regions of interest on the opposite sides of the location of interest or there is a pedestrian entering a region of interest on only one of the opposite sides.

In response to no pedestrian entering the regions of interest on the opposite sides of the location of interest or there is a pedestrian entering a region of interest on only one of the opposite sides ("Yes" in step 53), the procedure returns to step 52 again.

In response to a pedestrian entering the regions of interest on the opposite sides of the location of interest ("Yes" in step 53), the procedure proceeds to step 54 and poses of the pedestrians entering the regions on the opposite sides of the location of interest are estimated.

At step 55, if the distance between the key points at the wrists of the pedestrians on the opposite sides of the location of interest is greater than a second threshold ("No" at step 55), it is determined that there is no item handover action across the fence between the pedestrians entering the regions of interest on the opposite sides of the location of interest, and at this time, the procedure returns to step 52 again. If the distance between the key points of the pedestrians on the opposite sides of the location of interest is less than or equal to the second threshold ("Yes" at step 55), the procedure proceeds to step 56 to determine that there is an item handover action across the fence between the pedestrians entering the regions of interest on the opposite sides of the location of interest.

Alternatively, when it is identified whether there is a pedestrian and/or object entering the regions of interest on the opposite sides of the location of interest, it may also be analyzed whether features of the pedestrian and/or object are human features or object features based on the features of the pedestrian and/or object.

### • Detection of illegal stay of a pedestrian and leaving of an item

A general principle of detecting illegal stay of a pedestrian and leaving of an item is to firstly determine whether a static object is a person or an item, and then determine whether the person or the item satisfies a residence time, so as to determine whether the person illegally stays or the item is left.

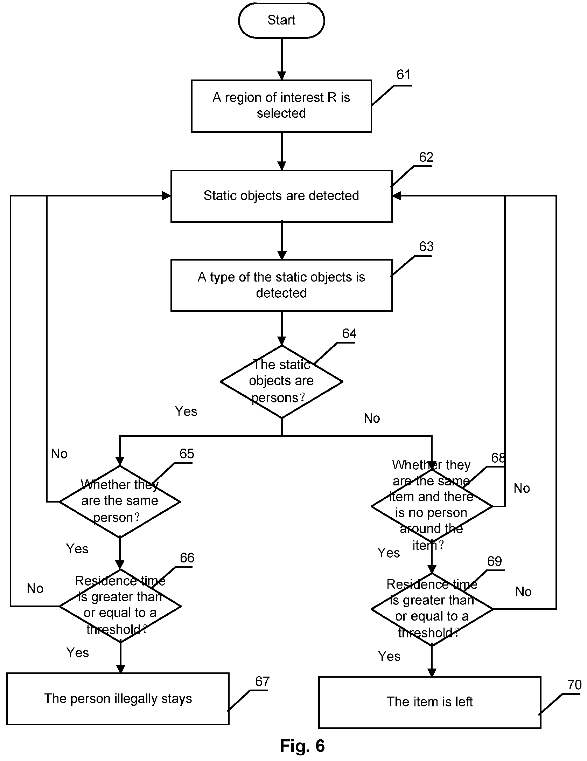

Fig. 6 illustrates a flowchart of a process of detecting illegal stay of a person/leaving of an item according to an exemplary embodiment.

At step 61, a region of interest R is selected. For example, a certain corner in a departure lounge may be selected.

At step 62, it is detected whether a certain object in the region of interest is a static object. For example, a Gaussian mixture model is used to model a background, and a statistic object is detected based on the acquired background information and an initial background using a frame difference method.

At step 63, a type of the static object is detected, that is, it is detected whether the static object is a person or an item. For example, based on the above description, a rectangular bounding box pbox of the static object may be firstly acquired, and then features of the static object are extracted from the rectangular bounding box pbox. If a certain feature (or some features) (for example, facial features, gait features, human body features, iris features, etc.) of the static object may be extracted, the static object may be determined to be a person; otherwise, the static object may be determined to be an item.

In response to determining that the static objects are persons ("Yes" at step 64), the procedure proceeds to step 65 to determine whether the static persons are the same person. For example, a rectangular bounding box pbox of a static person may be extracted from each frame of image, and then features (for example, facial features, gait features, human body features, iris features, etc.) of the static person may be extracted from the rectangular bounding box pbox. It is determined whether the static persons are the same person by comparing the extracted features.

In response to the static persons being not the same person ("No" at step 65), the procedure returns to step 62 again to detect static objects.

In response to the static persons being the same person ("Yes" at step 65), the procedure proceeds to step 66 to determine whether a residence time of the static person in the region of interest is greater than or equal to a threshold. In response to the residence time of the static person being greater than the threshold, the procedure proceeds to step 67 to determine that the static person is a person which illegally stays.

In response to the static objects being items ("No" at step 64), the procedure proceeds to step 68 to determine whether the static items are the same item and there is no person around the item. For example, it may be determined whether the static items are the same item by extracting and comparing features of the static items. For example, it may be determined whether there is a person around the item by determining whether features of the person may be extracted around the item.

In response to the static items being not the same item and/or a person being around the item ("No" in step 68), the procedure returns to step 62 again to detect static objects again.

In response to the static items being the same item and no person being around the item ("Yes" in step 68), the procedure proceeds to step 69 to determine whether a residence time of the item is greater than or equal to a threshold.

In response to the residence time of the item being less than the threshold ("No" at step 69), the procedure returns to step 62 again.

In response to the residence time of the item being greater than or equal to the threshold ("Yes" at step 69), the procedure proceeds to step 610 to determine that the item is an item which is left.

Although in the above description, the determination of the residence time (step 66 and step 69) is described after determining whether the static objects are the same person or whether the static items are the same item and there is no person around the item (step 65 and step 68), it should be understood by those skilled in the art that the determination of the residence time (step 66 and step 69) may be performed before determining whether the static objects are the same person or whether the static items are the same item and there is no person around the item (step 65 and step 68).

The above is the description of the functions of performing person tracking in a real time, searching for a person, detecting item handover across a fence, illegal stay of a person, and/or leaving of an item which are performed by the video/image analysis module 1010 based on the video/image provided by the information collection module 100. It should be understood by those skilled in the art that the various operations described above are not limiting.

Referring again to Fig. 3, the video/image analysis module 1010 may also be configured to detect whether an inspected object carries a contraband/is involved with drugs and detect a category of the contraband based on a video/image acquired from the video collection device, the terahertz/millimeter wave device, and/or the item machine, and odor information acquired from the electronic nose.

The description of how to detect whether the inspected object carries a contraband/is involved with drugs and how to detect a category of the contraband will not be described in detail here.

Referring again to Fig. 3, the comprehensive analysis module 1011 may be configured to perform comprehensive analysis based on an analysis result obtained by the video/image analysis module 1010 and a model previously stored in the comprehensive analysis module 1011.

In an exemplary embodiment, the comprehensive analysis may refer to, for example, but not limited to, one or more of analysis of whether a person or item causing abnormality information (for example, carrying of explosives, item handover across a fence, illegal stay, etc.) has done other dangerous actions before; in response to multiple abnormality information, determination of a priority of each abnormality information; analysis of whether the abnormality information has occurred before; analysis of whether a person who causes abnormality information has caused other abnormality information before, etc.

In one example, when the video/image analysis module 1010 determines danger information that an object A carries a contraband at a security checkpoint and danger information that someone fights in a departure lounge at the same time based on a video and/or image transmitted by the information collection module 100, the comprehensive analysis module 1011 may determine, through analysis, that a security level of the dangerous information that the object A carries a contraband is higher than a security level of the dangerous information that someone fights in a departure lounge based on a model which is stored therein in advance. Thereby, the comprehensive analysis module 1011 may firstly transmit information that the object A carries a contraband to the display and reminder module 103, and then transmit the information that someone fights in a departure lounge to the display and reminder module 103.

Alternatively, in response to display and reminder modules 103 being arranged in a plurality of places, when the video/image analysis module 1010 determines danger information that someone is fighting in a departure lounge and danger information that someone is committing a crime with a knife at the same time based on the video and/or image transmitted by the information collection module 100, the comprehensive analysis module 1011 may transmit the respective information to display and reminder modules 103 at or near the incident.

In one example, the comprehensive analysis module 1011 may compare the danger information for a certain object which is determined through analysis by the video/image analysis module 1010 with previous danger information for the object which is stored in the storage module 102 to determine whether the danger information is the same as the previous danger information. In response to the danger information being the same, the comprehensive analysis module 1011 may no longer repeatedly transmit alarm information to the display and reminder module 103, so as not to unnecessarily interfere with other information.

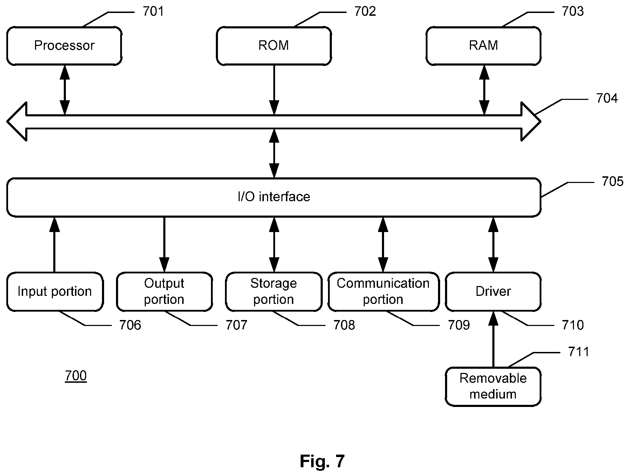

Fig. 7 schematically illustrates a block diagram of an electronic device suitable for implementing the method described above according to an embodiment of the present disclosure. The electronic device shown in Fig. 7 is only an example.

As shown in Fig. 7, the electronic device 700 according to the embodiment of the present disclosure comprises a processor 701 which may perform various appropriate actions and processes according to a program stored in a Read-Only Memory (ROM) 702 or a program which is loaded from a storage portion 708 into a Random Access Memory (RAM) 703. The processor 701 may comprise, for example, a general-purpose microprocessor (for example, a Central Processing Unit (CPU)), an instruction set processor and/or related chipsets, and/or a dedicated microprocessor (for example, an Application Specific Integrated Circuit (ASIC)), etc. The processor 701 may further comprise an on-board memory for caching purposes. The processor 701 may comprise a single processing unit or a plurality of processing units for performing different actions of a flow of the method according to the embodiments of the present disclosure.

Various programs and data necessary for an operation of the system 700 are stored in the RAM 703. The processor 701, the ROM 702, and the RAM 703 are connected to each other through a bus 704. The processor 701 performs various operations of the flow of the method according to the embodiments of the present disclosure by executing the program in the ROM 702 and/or RAM 703. It should be illustrated that the program may also be stored in one or more memories other than the ROM 702 and the RAM 703. The processor 701 may also perform various operations of the flow of the method according to the embodiments of the present disclosure by executing the program stored in the one or more memories.

According to an embodiment of the present disclosure, the system 700 may further comprise an Input/Output (I/O) interface 705, which is also connected to the bus 704. The system 700 may further comprise one or more of the following components connected to the I/O interface 705: an input portion 706 comprising a keyboard, a mouse, etc.; an output portion 707 comprising, for example, a Cathode Ray Tube (CRT), a Liquid Crystal Display (LCD), etc., and a speaker etc.; the storage portion 708 comprising a hard disk, etc.; and a communication portion 709 comprising a network interface card such as an LAN card, a modem, etc. The communication portion 709 performs communication processing via a network such as the Internet. The driver 710 is also connected to the I/O interface 705 as needed. A removable medium 711, such as a magnetic disk, an optical disk, a magneto-optical disk, a semiconductor memory, etc., is installed on the driver 710 as needed, so that a computer program read out therefrom is installed into the storage portion 708 as needed.

According to an embodiment of the present disclosure, the flow of the method according to the embodiment of the present disclosure may be implemented as a computer software program. For example, embodiments of the present disclosure comprise a computer program product comprising a computer program carried on a computer-readable storage medium, wherein the computer program comprises a program code for performing the method shown in the flowchart. In such an embodiment, the computer program may be downloaded and installed from a network through the communication portion 709, and/or installed from the removable medium 711. The computer program, when executed by the processor 701, performs the above-described functions defined in the system according to the embodiment of the present disclosure. According to the embodiments of the present disclosure, the above-described systems, devices, apparatuses, modules, units, etc. may be implemented by computer program modules.

The present disclosure further provides a computer-readable storage medium. The computer-readable storage medium may be included in the device/apparatus/system described in the above embodiments, or may exist alone without being assembled into the device/apparatus/system. The above computer-readable storage medium has carried thereon one or more programs, which, when executed, perform the method according to the embodiment of the present disclosure.

According to an embodiment of the present disclosure, the computer-readable storage medium may be a non-volatile computer-readable storage medium, for example, but not limited to, a portable computer disk, a hard disk, a Random Access Memory (RAM), a Read Only Memory (ROM), an Erasable Programmable Read Only Memory (EPROM or a flash memory), a portable Compact Disk Read Only Memory (CD-ROM), an optical storage device, a magnetic storage device, or any suitable combination thereof. In the present disclosure, the computer-readable storage medium may be any tangible medium containing or storing a program, which may be used by or in combination with an instruction execution system, apparatus, or device.

For example, according to an embodiment of the present disclosure, the computer-readable storage medium may comprise one or more memories other than the ROM 702 and/or RAM 703 and/or ROM 702 and RAM 703 described above. Although the various steps have been described above according to an order shown in the accompanying drawings, it should be understood by those skilled in the art that the various steps may be performed in a different order, or the embodiments of the present disclosure may be performed without one or more of the above steps.

It may be understood from the above content that electronic components of one or more systems or devices may comprise, but not limited to, at least one processing unit, a memory, and a communication bus or communication apparatus which couples various components comprising the memory to the processing unit. The system or device may comprise or have access to various device-readable media. The system memory may comprise device-readable storage media in a form of volatile and/or non-volatile memory (for example, a Read Only Memory (ROM) and/or a Random Access Memory (RAM)). By way of example without limitation, the system memory may further comprise an operating system, application programs, other program modules, and program data.

The embodiments may be implemented as a system, method, or program product. Therefore, the embodiments may take a form of pure-hardware embodiment or an embodiment comprising software (comprising firmware, resident software, microcode, etc.), which may be collectively referred to herein as a "circuit", "module", or "system". In addition, the embodiments may take a form of a program product embodied in at least one device-readable medium having device-readable program codes embodied thereon.

A combination of the device-readable storage media may be used. In a context of the present disclosure, a device-readable storage medium ("storage medium") may be any tangible non-signal medium, which may contain or store a program composed of program codes which are configured to be used by or in conjunction with an instruction execution system, apparatus, or device. For the purposes of the present disclosure, the storage media or devices should be interpreted as being non-transitory, that is, excluding signals or propagation media.

The present disclosure is presented for purposes of illustration and description, but is not intended to be exhaustive or limiting. Many modifications and changes will be apparent to those of ordinary skill in the art. The embodiments are selected and described in order to illustrate the principles and practical applications, and to enable those of ordinary skill in the art to understand various embodiments of the present disclosure with various modifications suitable for the specific uses contemplated.

## Claims

1. An information identification system (1), comprising:
an information collection module (100) including a plurality of information collection devices and configured to collect multi-dimensional information for objects;
an information processing module (101);
a storage module (102) configured to store the multi-dimensional information and various data generated during the detection by the information processing module; and
a display and reminder module (103), comprises a display device and an alarm device;
wherein the information processing module (101) is further configured to perform the following operations to perform the tracking or searching for the objects in a real time:
extracting a plurality of first bounding boxes from a first frame in the video stream, and extracting a plurality of second bounding boxes from a second frame in the video stream, by using a detection algorithm based on a deep convolutional network;
pairing each of the plurality of first bounding boxes with each of the plurality of second bounding boxes to form a paired matrix containing a plurality of paired items, wherein the pairing is implemented by weighting a result of re-identification of the object and an overlap ratio between the first bounding box and the second bounding box to obtain the paired matrix, wherein a dimension of the paired matrix is determined by a number of the first bounding boxes and a number of the second bounding boxes;
calculating a value of each of the plurality of paired items in the paired matrix, and using an item with a minimum value as a target item, wherein the target item indicates an item formed by pairing bounding boxes for the same object;
wherein the information processing module (101) is further configured to extract feature information for the objects from the video stream collected by the information collection module, and the calculating a value of each of the plurality of paired items in the paired matrix, and using an item with the minimum value as a target item comprises:
calculating an overlap ratio between the paired bounding boxes in each of the plurality of paired items;
calculating a similarity between feature information of the paired bounding boxes in each paired item; and
selecting a paired item with the largest overlap ratio between the bounding boxes and the largest similarity between the feature information in the bounding boxes as the target item.

2. An information identification method, comprising:
collecting multi-dimensional information for objects by using multiple information collection devices;
storing the multi-dimensional information and various data generated during the detection; and
tracking or searching for the objects in a real time comprises:
extracting a plurality of first bounding boxes from a first frame in the video stream, and extracting a plurality of second bounding boxes from a second frame in the video stream, by using a detection algorithm based on a deep convolutional network;
pairing each of the plurality of first bounding boxes with each of the plurality of second bounding boxes to form a paired matrix containing a plurality of paired items, wherein a dimension of the paired matrix is determined by a number of the first bounding boxes and a number of the second bounding boxes, wherein the pairing is implemented by weighting a result of re-identification of the object and an overlap ratio between the first bounding box and the second bounding box to obtain the paired matrix; and
calculating a value of each of the plurality of paired items in the paired matrix, and using an item with a minimum value as a target item, wherein the target item indicates an item formed by pairing bounding boxes for the same object;
further comprising: in a case where multiple abnormality information is detected at the same time, determining priorities of the multiple abnormality information, so as to display the abnormality information according to the priorities;
the method further comprising extracting feature information for the objects from the video stream collected by the information collection module, wherein the calculating a value of each of the plurality of paired items in the paired matrix, and using an item with the minimum value as a target item comprises:
calculating an overlap ratio between the paired bounding boxes in each of the plurality of paired items;
calculating a similarity between feature information of the paired bounding boxes in each paired item; and
selecting a paired item with the largest overlap ratio between the bounding boxes and the largest similarity between the feature information in the bounding boxes as the target item.

3. A non-transitory computer readable medium having recorded thereon program code instructions capable of implementing the method according to claim 2.

4. An electronic device, comprising:
one or more processors; and
a storage apparatus for storing one or more programs,
wherein the one or more programs, when executed by the one or more processors, cause the one or more processors to perform the method according to claim 2.

## Patentansprüche

1. Ein Informationsidentifizierungssystem (1), umfassend:
ein Informationserfassungsmodul (100), das eine Mehrzahl von Informationserfassungsvorrichtungen einschließt und dazu konfiguriert ist, mehrdimensionale Informationen für Objekte zu erfassen;
ein Informationsverarbeitungsmodul (101);
ein Speichermodul (102), das dazu konfiguriert ist, die mehrdimensionalen Informationen und verschiedene Daten, die während der Detektion durch das Informationsverarbeitungsmodul erzeugt werden, zu speichern; und
ein Anzeige- und Erinnerungsmodul (103), umfasst eine Anzeigevorrichtung und eine Alarmvorrichtung;
wobei das Informationsverarbeitungsmodul (101) ferner dazu konfiguriert ist, die folgenden Operationen auszuführen, um das Verfolgen oder Suchen nach den Objekten in einer Echtzeit durchzuführen:
Extrahieren einer Mehrzahl von ersten Begrenzungsrahmen aus einem ersten Einzelbild in dem Videostrom und Extrahieren einer Mehrzahl von zweiten Begrenzungsrahmen aus einem zweiten Einzelbild in dem Videostrom durch Verwenden eines Detektionsalgorithmus, der auf einem tiefen konvolutionalen Netz basiert;
Paaren jedes der Mehrzahl von ersten Begrenzungsrahmen mit jedem der Mehrzahl von zweiten Begrenzungsrahmen, um eine Paarungsmatrix zu bilden, die eine Mehrzahl von gepaarten Elementen enthält, wobei das Paaren durch Gewichten eines Ergebnisses einer Wiederidentifizierung des Objekts und eines Überlappungsverhältnisses zwischen dem ersten Begrenzungsrahmen und dem zweiten Begrenzungsrahmen implementiert wird, um die Paarungsmatrix zu erhalten, wobei eine Dimension der Paarungsmatrix durch eine Anzahl der ersten Begrenzungsrahmen und eine Anzahl der zweiten Begrenzungsrahmen bestimmt wird;
Berechnen eines Werts jedes der Mehrzahl von gepaarten Elementen in der Paarungsmatrix und Verwenden eines Elements mit einem minimalen Wert als ein Zielelement, wobei das Zielelement ein Element angibt, das durch Paaren von Begrenzungsrahmen für dasselbe Objekt gebildet wird;
wobei das Informationsverarbeitungsmodul (101) ferner dazu konfiguriert ist, Merkmalsinformationen für die Objekte aus dem von dem Informationserfassungsmodul erfassten Videostrom zu extrahieren, und das Berechnen eines Werts jedes der Mehrzahl von gepaarten Elementen in der Paarungsmatrix und Verwenden eines Elements mit dem minimalen Wert als ein Zielelement umfasst:
Berechnen eines Überlappungsverhältnisses zwischen den gepaarten Begrenzungsrahmen in jedem der Mehrzahl von gepaarten Elementen;
Berechnen einer Ähnlichkeit zwischen Merkmalsinformationen der gepaarten Begrenzungsrahmen in jedem gepaarten Element; und
Auswählen eines gepaarten Elements mit dem größten Überlappungsverhältnis zwischen den Begrenzungsrahmen und der größten Ähnlichkeit zwischen den Merkmalsinformationen in den Begrenzungsrahmen als das Zielelement.

2. Ein Informationsidentifizierungsverfahren, umfassend:
Erfassen mehrdimensionaler Informationen für Objekte unter Verwendung mehrerer Informationserfassungsvorrichtungen;
Speichern der mehrdimensionalen Informationen und verschiedener während der Detektion erzeugter Daten; und
Verfolgen oder Suchen nach den Objekten in einer Echtzeit umfasst:
Extrahieren einer Mehrzahl von ersten Begrenzungsrahmen aus einem ersten Einzelbild in dem Videostrom und Extrahieren einer Mehrzahl von zweiten Begrenzungsrahmen aus einem zweiten Einzelbild in dem Videostrom durch Verwenden eines Detektionsalgorithmus, der auf einem tiefen konvolutionalen Netz basiert;
Paaren jedes der Mehrzahl von ersten Begrenzungsrahmen mit jedem der Mehrzahl von zweiten Begrenzungsrahmen, um eine Paarungsmatrix zu bilden, die eine Mehrzahl von gepaarten Elementen enthält, wobei eine Dimension der Paarungsmatrix durch eine Anzahl der ersten Begrenzungsrahmen und eine Anzahl der zweiten Begrenzungsrahmen bestimmt wird, wobei das Paaren durch Gewichten eines Ergebnisses einer Wiederidentifizierung des Objekts und eines Überlappungsverhältnisses zwischen dem ersten Begrenzungsrahmen und dem zweiten Begrenzungsrahmen implementiert wird, um die Paarungsmatrix zu erhalten; und
Berechnen eines Werts jedes der Mehrzahl von gepaarten Elementen in der Paarungsmatrix und Verwenden eines Elements mit einem minimalen Wert als ein Zielelement, wobei das Zielelement ein Element angibt, das durch Paaren von Begrenzungsrahmen für dasselbe Objekt gebildet wird;
ferner umfassend: in einem Fall, in dem mehrere Anomalieinformationen gleichzeitig detektiert werden, Bestimmen von Prioritäten der mehreren Anomalieinformationen, um die Anomalieinformationen gemäß den Prioritäten anzuzeigen;
das Verfahren ferner umfassend Extrahieren von Merkmalsinformationen für die Objekte aus dem von dem Informationserfassungsmodul erfassten Videostrom, wobei das Berechnen eines Werts jedes der Mehrzahl von gepaarten Elementen in der Paarungsmatrix und Verwenden eines Elements mit dem minimalen Wert als ein Zielelement umfasst:
Berechnen eines Überlappungsverhältnisses zwischen den gepaarten Begrenzungsrahmen in jedem der Mehrzahl von gepaarten Elementen;
Berechnen einer Ähnlichkeit zwischen Merkmalsinformationen der gepaarten Begrenzungsrahmen in jedem gepaarten Element; und
Auswählen eines gepaarten Elements mit dem größten Überlappungsverhältnis zwischen den Begrenzungsrahmen und der größten Ähnlichkeit zwischen den Merkmalsinformationen in den Begrenzungsrahmen als das Zielelement.

3. Ein nichtflüchtiges computerlesbares Medium, auf dem Programmcodeanweisungen aufgezeichnet sind, die zum Implementieren des Verfahrens nach Anspruch 2 fähig sind.

4. Eine elektronische Vorrichtung, umfassend:
einen oder mehrere Prozessoren; und
eine Speichervorrichtung zum Speichern eines oder mehrerer Programme,
wobei das eine oder die mehreren Programme, wenn von dem einen oder den mehreren Prozessoren ausgeführt, den einen oder die mehreren Prozessoren veranlassen, das Verfahren nach Anspruch 2 durchzuführen.

## Revendications

1. Un système d'identification d'informations (1), comprenant :
un module de collecte d'informations (100) comprenant une pluralité de dispositifs de collecte d'informations et configuré pour collecter des informations multidimensionnelles pour des objets ;
un module de traitement d'informations (101) ;
un module de stockage (102) configuré pour stocker les informations multidimensionnelles et diverses données générées pendant la détection par le module de traitement d'informations ; et
un module d'affichage et de rappel (103), comprend un dispositif d'affichage et un dispositif d'alarme ;
dans lequel le module de traitement d'informations (101) est en outre configuré pour exécuter les opérations suivantes afin d'effectuer le suivi ou la recherche des objets en temps réel :
l'extraction d'une pluralité de premières boîtes englobantes à partir d'une première trame dans le flux vidéo, et l'extraction d'une pluralité de secondes boîtes englobantes à partir d'une seconde trame dans le flux vidéo, à l'aide d'un algorithme de détection basé sur un réseau convolutif profond ;
l'appariement de chacune des premières boîtes englobantes de la pluralité avec chacune des secondes boîtes englobantes de la pluralité pour former une matrice appariée contenant une pluralité d'éléments appariés, dans lequel l'appariement est mis en œuvre en pondérant un résultat de réidentification de l'objet et un rapport de chevauchement entre la première boîte englobante et la seconde boîte englobante pour obtenir la matrice appariée, dans lequel une dimension de la matrice appariée est déterminée par un nombre des premières boîtes englobantes et un nombre des secondes boîtes englobantes ;
le calcul d'une valeur de chacun des éléments appariés de la pluralité dans la matrice appariée, et l'utilisation d'un élément ayant une valeur minimale en tant qu'élément cible, dans lequel l'élément cible indique un élément formé par appariement de boîtes englobantes pour le même objet ;
dans lequel le module de traitement d'informations (101) est en outre configuré pour extraire des informations de caractéristiques pour les objets à partir du flux vidéo collecté par le module de collecte d'informations, et le calcul d'une valeur de chacun des éléments appariés de la pluralité dans la matrice appariée, et l'utilisation d'un élément ayant la valeur minimale en tant qu'élément cible comprend :
le calcul d'un rapport de chevauchement entre les boîtes englobantes appariées dans chacun des éléments appariés de la pluralité ;
le calcul d'une similarité entre les informations de caractéristiques des boîtes englobantes appariées dans chaque élément apparié ; et
la sélection d'un élément apparié présentant le plus grand rapport de chevauchement entre les boîtes englobantes et la plus grande similarité entre les informations de caractéristiques dans les boîtes englobantes en tant qu'élément cible.

2. Un procédé d'identification d'informations, comprenant :
la collecte d'informations multidimensionnelles pour des objets à l'aide de multiples dispositifs de collecte d'informations ;
le stockage des informations multidimensionnelles et de diverses données générées pendant la détection ; et
le suivi ou la recherche des objets en temps réel comprend :
l'extraction d'une pluralité de premières boîtes englobantes à partir d'une première trame dans le flux vidéo, et l'extraction d'une pluralité de secondes boîtes englobantes à partir d'une seconde trame dans le flux vidéo, à l'aide d'un algorithme de détection basé sur un réseau convolutif profond ;
l'appariement de chacune des premières boîtes englobantes de la pluralité avec chacune des secondes boîtes englobantes de la pluralité pour former une matrice appariée contenant une pluralité d'éléments appariés, dans lequel une dimension de la matrice appariée est déterminée par un nombre des premières boîtes englobantes et un nombre des secondes boîtes englobantes, dans lequel l'appariement est mis en œuvre en pondérant un résultat de réidentification de l'objet et un rapport de chevauchement entre la première boîte englobante et la seconde boîte englobante pour obtenir la matrice appariée ; et
le calcul d'une valeur de chacun des éléments appariés de la pluralité dans la matrice appariée, et l'utilisation d'un élément ayant une valeur minimale en tant qu'élément cible, dans lequel l'élément cible indique un élément formé par appariement de boîtes englobantes pour le même objet ;
comprenant en outre : dans un cas où de multiples informations d'anomalie sont détectées en même temps, la détermination de priorités des multiples informations d'anomalie, de manière à afficher les informations d'anomalie selon les priorités ;
le procédé comprenant en outre l'extraction d'informations de caractéristiques pour les objets à partir du flux vidéo collecté par le module de collecte d'informations, dans lequel le calcul d'une valeur de chacun des éléments appariés de la pluralité dans la matrice appariée, et l'utilisation d'un élément ayant la valeur minimale en tant qu'élément cible comprend :
le calcul d'un rapport de chevauchement entre les boîtes englobantes appariées dans chacun des éléments appariés de la pluralité ;
le calcul d'une similarité entre les informations de caractéristiques des boîtes englobantes appariées dans chaque élément apparié ; et
la sélection d'un élément apparié présentant le plus grand rapport de chevauchement entre les boîtes englobantes et la plus grande similarité entre les informations de caractéristiques dans les boîtes englobantes en tant qu'élément cible.

3. Un support non transitoire lisible par ordinateur sur lequel sont enregistrées des instructions de code de programme capables de mettre en œuvre le procédé selon la revendication 2.

4. Un dispositif électronique, comprenant :
un ou plusieurs processeurs ; et
un appareil de stockage destiné à stocker un ou plusieurs programmes,
dans lequel les un ou plusieurs programmes, lorsqu'ils sont exécutés par les un ou plusieurs processeurs, amènent les un ou plusieurs processeurs à exécuter le procédé selon la revendication 2.
